**Europäisches Patentamt**

**European Patent Office**

**Office européen des brevets**

(19)

(11) Veröffentlichungsnummer : **0 081 695**
**B1**

(12)      EUROPÄISCHE PATENTSCHRIFT

(45) Veröffentlichungstag der Patentschrift :
01.02.89

(51) Int. Cl.⁴ : **B 60 P   1/38**

(21) Anmeldenummer : 82110562.4

(22) Anmeldetag : 16.11.82

(54) **Fahrzeug für den Lasttransport.**

(30) Priorität : 14.12.81 NL 8105629

(43) Veröffentlichungstag der Anmeldung :
22.06.83 Patentblatt 83/25

(45) Bekanntmachung des Hinweises auf die Patenterteilung : 01.02.89 Patentblatt 89/05

(84) Benannte Vertragsstaaten :
**AT BE CH DE FR GB IT LI LU SE**

(56) Entgegenhaltungen :
**EP--A-- 0 027 409**
**AT--A--   314 990**
**DE--A-- 2 003 292**
**FR--A--   496 924**
**FR--A-- 2 029 896**
**FR--A-- 2 063 443**
**GB--A--   293 997**
**GB--A--   419 351**
**NL--C--     66 906**
**US--A-- 3 247 983**
**US--A-- 3 704 798**

(73) Patentinhaber : **CREFINA Credit and Finance Ets.**
**Haus Forum P.O. Box 636**
**FL-9490 Vaduz (LI)**

(72) Erfinder : **Renzema, J.**
**Beetgummer Weg 7**
**NL-9041 CB Berlikum (Fr.) (NL)**

(74) Vertreter : **Patentanwälte Grünecker, Kinkeldey,**
**Stockmair & Partner**
**Maximilianstrasse 58**
**D-8000 München 22 (DE)**

**Beschreibung**

Die Erfindung betrifft ein Fahrzeug für den Lasttransport, insbesondere eine Kombination aus Zugmaschine und Auflieger, mit einer Entlade- und Ladeeinrichtung, die einen Ladeboden mit einem auf dem Fahrzeugboden aufliegenden Tuch (7) als ladungstragendes Teil, eine in beiden Drehrichtungen drehbare Ladetrommel (8 ; 18) und eine in beiden Drehrichtungen drehbare Entladetrommel (13), die an dem Fahrzeug gelagert sind, umfaßt, wobei der Ladeboden an dem einen Ende mit der Ladetrommel (8 ; 18) und an dem anderen Ende mit der Entladetrommel (13) auf- und abwickelbar verbunden ist.

Aus der AT-A 314 990 ist ein Fahrzeug bekanntgeworden, bei dem die Ladefläche wenigstens zum Teil aus nebeneinander angeordneten Rollen ausgebildet ist, über die ein unendliches Band als Transportband zum Aufnehmen von Ladegütern ausgebildet ist.

Aus der FR-A-2 063 443 ist auch bereits ein Fahrzeug bekannt, bei dem ein aus einem Tuch bestehendes unendliches Ladeband über an dem vorderen bzw. hinteren Ende des Fahrzeugs vorgesehene Rollen geführt ist, die jeweils über Zahnkettengetriebe mit Hilfe hydraulisch angetriebener Motoren antreibbar sind. Die hydraulischen Motoren sind umkehrbar antreibbar, so daß das Ladeband entsprechend vorwärts und rückwärts verschoben werden kann.

Aus der US-A-3,247,983 ist auch bereits ein Fahrzeug für den Lasttransport bekanntgeworden, bei dem eine Ladefläche durch ein unendliches Ladeband gebildet wird, das über parallel zueinander angeordnete und in den Seitenrahmen gelagerte Rollen geführt ist. Wenigstens eine der beiden Endrollen ist dadurch antreibbar, daß im Inneren dieser Rolle ein Elektro- oder Hydromotor angeordnet ist, der gegen den seitlichen Rahmen arbeitet und die Rolle antreibt.

Aus der US-A-3,704,798 ist auch ein Fahrzeug bekannt, bei dem ein aus einem Tuch ausgebildeter Ladeboden auf dem Tragboden des Fahrzeuges aufliegend vorgesehen ist, der an dem rückwärtigen Ende des Fahrzeugs auf eine drehbar an diesem gelagerte Rolle aufwickelbar ist, während das dem vorderen Ende des Fahrzeuges zugewandte Ende des Ladebodens an wenigstens einem Seil befestigt ist, das zum Verschieben des Ladebodens über die Ladefläche auf entsprechende Seilwinden aufwickelbar ist.

Aus der EP-A-0 027 409 ist auch ein Fahrzeug für den Lasttransport bekanntgeworden, bei dem ein flexibles Ladeband vorgesehen ist, das auf einer Ladefläche aufliegt und an seinem vorderen bzw. hinteren Ende auf eine Ladetrommel bzw. Entladetrommel aufwickelbar ist. Die Entladetrommel bzw. Ladetrommel werden jeweils über Motoren und Getriebe angetrieben, die an den äußeren Enden der Trommel angreifen.

Aufgrund von gesetzlichen Vorschriften in den einzelnen Ländern sind die Breite sowie auch die Länge und Höhe der Kraftfahrzeuge beschränkt, so daß die Ladefläche und insgesamt der Laderaum nicht beliebig erweitert werden kann. Es ist deshalb das Bestreben, den nach den gesetzlichen Vorschriften möglichen Laderaum so groß wie möglich und auch die mit einem Kraftfahrzeug unter Einhaltung der gesetzlichen Bestimmungen transportierbare Last optimal zu nutzen.

Der vorliegenden Erfindung liegt deshalb die Aufgabe zugrunde, bei Fahrzeugen für den Lasttransport der eingangs erwähnten Art die Ladefläche im Rahmen der gesetzlichen vorbestimmten Außenabmessungen von Fahrzeugen möglichst groß auszubilden, ohne daß sich gleichzeitig Beschränkungen in bezug auf die maximal transportierbare Last ergeben.

Die Aufgabe wird gemäß der Erfindung dadurch gelöst, daß die Entladetrommel 13 und die Ladetrommel 8 ; 18 jeweils über zwei im Inneren der Entladetrommel 13 bzw. der Ladetrommel 8 ; 18 angeordnete, in einem zylindrischen Gehäuse untergebrachte und mit diesen fest verbundene Hydromotoren, die mit jeweils den nach außen weisenden Gehäusestirnflächen an dem Fahrzeugchassis befestigt sind, antreibbar sind, und daß die rotierbaren Antriebswellen der Hydromotoren jeweils gegen die Mitte der Trommeln vorstehen und jeweils über Kupplungsmittel mit der Innenseite der Entladungstrommel bzw. der Ladetrommel in Eingriff stehen.

Durch die Erfindung wird der wichtige Fortschritt erreicht, daß die Beladungsfläche nunmehr optimal ausgestaltet werden kann und in der Größe praktisch mit der Oberfläche des Fahrzeugbodens zusammenfällt. Dadurch wird es unter den Einschränkungen der gesetzlichen Straßenverkehrsvorschriften zum ersten Mal möglich, auf einem solchen Fahrzeugboden zwei nebeneinanderstehende Europaletten zu transportieren. Dadurch steigt der Nutzungsgrad eines solchen Fahrzeuges erheblich. Dieser Vorteil konnte nur durch eine glückliche Kombination von mehreren technischen Maßnahmen erreicht werden, nämlich daß zunächst das Ladeband entgegen den Erwartungen nicht auf Rollen, sondern auf einem flachen Ladeboden aufliegt, da es sonst zu einem verstärkten Reißen des Ladebandes kommt, daß ferner das Ladeband nicht in Form eines endlosen Bandes vorgesehen wird, so daß das Band an seinen Enden auf Haspeln aufwickelbar ist, wodurch der Durchmesser der Antriebstrommel wesentlich verringert werden kann, um die außerordentlich hohen Lasten von jeweils über 20 t zu bewegen, und daß schließlich trotz dieser hohen zu bewegenden Lasten Antriebe vorgesehen werden, die im Inneren der Antriebsrolle gelagert sind, wodurch eine erheblich vergrößerte Breite erreicht wird. Ferner wird durch den Doppelantrieb vermieden, daß die Lade- und Entladetrommeln auf Torsion beansprucht werden.

Diese Konzeption ließ sich erst durch die Verwendung von Hydromotoren verwirklichen, die in einem zylindrischen Gehäuse angeordnet sind, so daß diese Hydromotoren über die Stirnseiten dieser zylindrischen Gehäuse und damit über eine verhältnismäßig große Fläche an dem Chassis zur Aufnahme der auftretenden Kräfte befestigt werden konnten.

Durch die besondere Ausbildung und Befestigung dieser Hydromotoren, die über Kupplungsmittel auf der Innenseite der Entlade- bzw. Ladetrommel angreifen, konnte schließlich eine Konzeption verwirklicht werden, mit der allein die hohen Lasten unter den sonst vorgegebenen geringen Abmessungen der Entlade- und Ladetrommel bewegt werden konnten.

Gemäß einer weiteren zweckmäßigen Ausbildung weist der Ladeboden ein mit dem einen Ende des ladungstragenden Tuchs über ein im wesentlichen vertikales, mit dem Tuch mitbewegtes Gestell verbundenes Drahtseil auf, während das andere Tuchende mit der Entladetrommel verbunden ist und das Drahtseil mit der Ladetrommel verbunden ist. Der Einsatz eines mit dem Tuch mitbewegbaren Kopfschotts hat den Vorteil, daß beim Fahren mit bzw. bei Laden oder Löschen einer lediglich zur Hälfte, jedenfalls nicht vollständig mit stückgütern beladenen Ladefläche ein Vornüberfallen der Ladung vermieden wird.

Vorzugsweise wird bei einer solchen Anordnung das Drahtseil über zwei in dem Gestell angeordnete Seilscheiben geführt. Dies kann zur Verminderung der Reibung wie auch zur Verringerung der Zugkraft erfolgen.

Nach einer weiteren zweckmäßigen Ausgestaltung wird an dem Heck des Fahrzeuges unterhalb des Ladebodens ein im wesentlichen quer zu diesem laufendes Transportband angesetzt, dessen Länge mindestens 100 % und dessen Breite 5 bis 30 % der Breite des Ladebodens beträgt und das durch gleiche Antriebsmittel wie die Entladetrommel antreibbar ist.

Im folgenden wird die Erfindung anhand der Zeichnungen näher erläutert, die ein Ausführungsbeispiel des Fahrzeugs in Form einer Kombination aus Zugmaschine und Auflieger wiedergibt. In der Zeichnung zeigen :

Fig. 1 in teilweise weggebrochener Seitenansicht eine Aufliegerkombination mit einer Lade- und Löscheinrichtung in der Ausführungsform mit Tuch und Drahtseil und einem mitbewegbaren Kopfschott, folglich für den Stückguttransport bestimmt ;

Figur 2 eine Vorderansicht der Kopfschotteinrichtung oder Ladetrommel ;

Figur 3 die Kopfschottwindeneinrichtung im Schnitt nach der Linie III-III der Figur 2 ;

Figur 4 die Kopfschottwindeneinrichtung im Schnitt nach der Linie IV-IV der Figur 2 ;

Figur 5 das bewgbare Kopfschott in der Vorderansicht ;

Figur 6 das Kopfschott in der Seitenansicht ;

Figur 7 eine Seitenansicht des Fahrzeughecks mit angesetztem Transportband zum Löschen von Schüttgut ; und

Figur 8 eine Draufsicht auf die Anordnung von Figur 7.

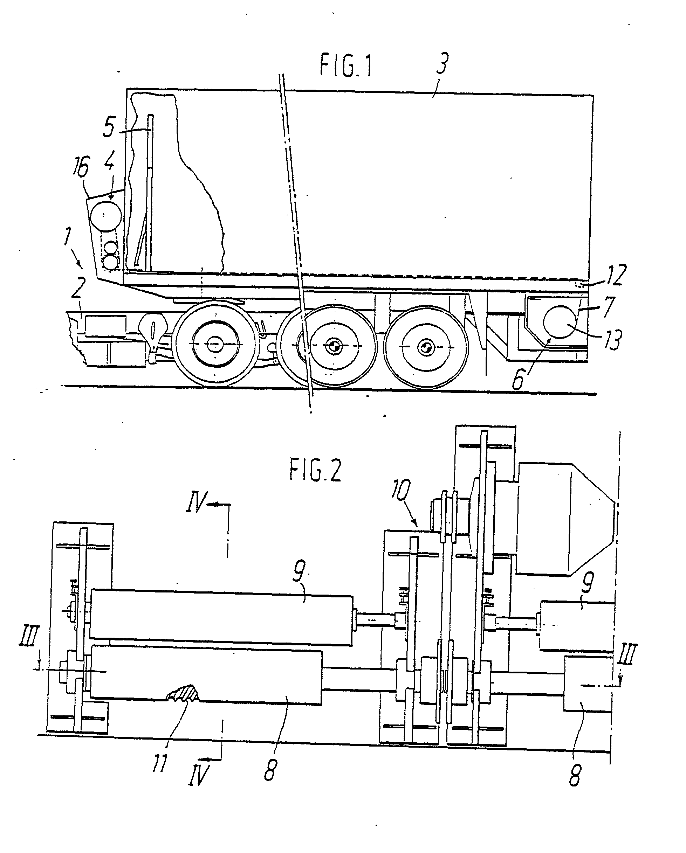

In der Zeichnung (Figur 1) ist durch 1 die Aufliegerkombination mit Zugmaschine 2 und Auflieger 3 wiedergegeben. An der Vorderseite des Aufliegers befindet sich die Kopfschottwindeneinrichtung 4 und am Heck die Löscheinrichtung 6. Mit 5 ist das mitbewegbare Kopfschott bezeichnet, während die Bezugszahl 7 das Tuch angibt, das sich auf dem Boden des Aufliegers befindet und diesen bedeckt.

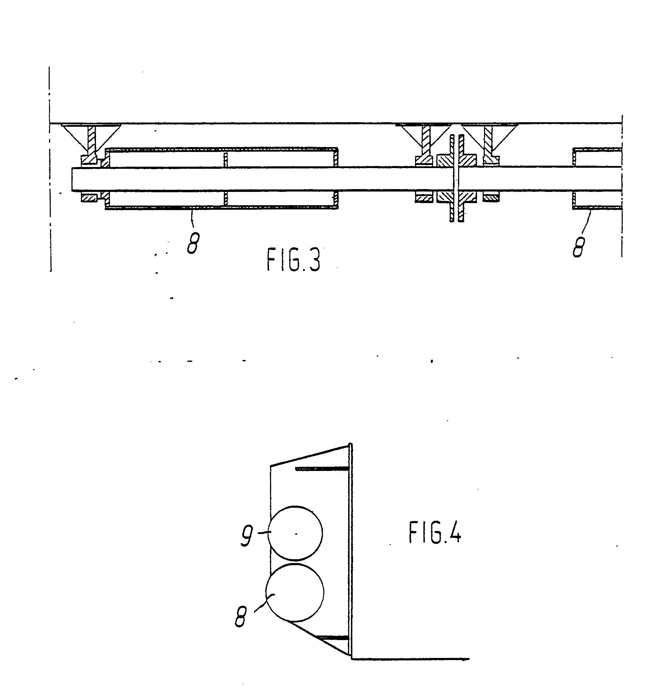

Die Kopfschottwindeneinrichtung 4 (Figuren 2 bis 4) besteht aus zwei Seiltrommeln 8 (Rillenlänge 15 m) mit darüber befindlichen Gummidruckwalzen 9, um das Seil in die Rille 11 zu leiten. Die Seiltrommeln werden hydraulisch über das Übertragungssystem 10 angetrieben, das einen Verzögerungskasten (Untersetzungsgetriebe) und Kettenübertragung umfaßt.

Die Löscheinrichtung 6 umfaßt die Löschtrommel 13 und die Umlenktrommel 12, um die das Tuch 7 geleitet wird.

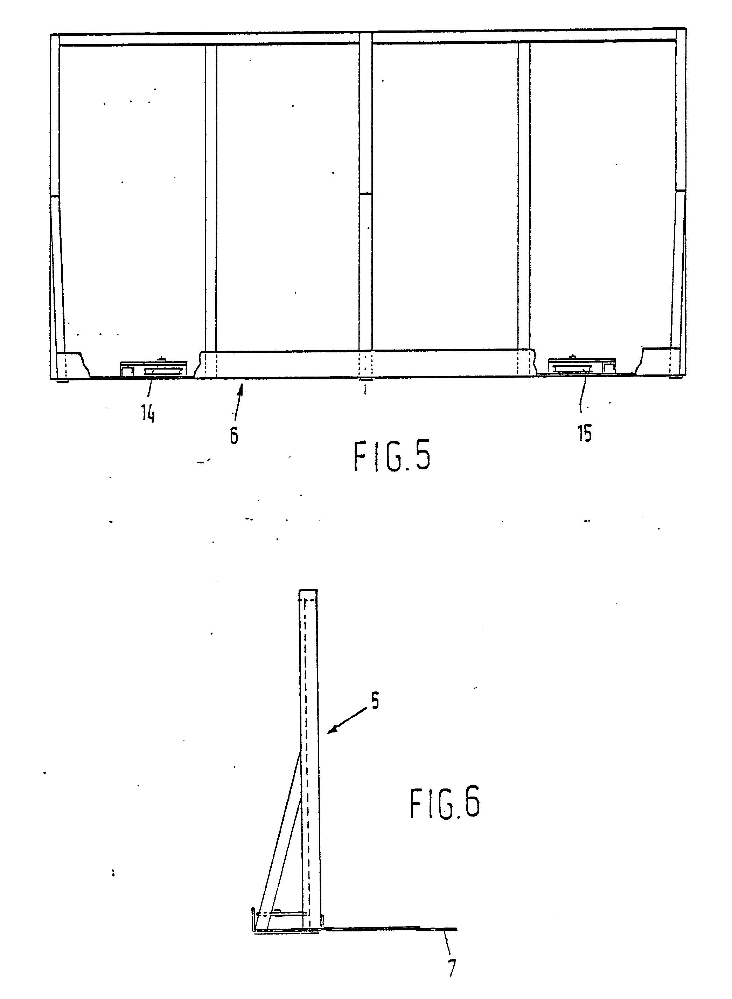

Das Kopfschott 5 (Figuren 5 und 6) hat die Form eines offenen Gitters und ist mit zwei Stahlseilscheiben 14, 15 versehen, über die das (nicht gezeichnete) Stahlseil zur Vorderseite, d. h. über zwei in der Stirnwand des Aufliegers angebrachte Einschnitte zu der Kopfschottwindeneinrichtung läuft. Die Abmessungen und die Anordnung der Kopfschottwindeneinrichtung einschließlich der Schutzkappe 16 sind derart, daß diese ganz innerhalb des Kopfradius des Aufliegers bleibt.

Das Tuch 7, von dem ein Ende über die Umlenktrommel 12 zu der Löschtrommel 13 geführt und mit dieser verbunden ist, ist an seinem anderen Ende, wie in Figur 6 gezeigt, über die gesamte Breite mit dem Kopfschott 5 verbunden.

Bei der Ausführung der Lade- und Löscheinrichtung, bei welcher der Ladeboden entsprechend der Darstellung in den Figuren 1-6 Tuch und Drahtseil umfaßt, hat das Tuch eine Länge, die gleich der Länge der Ladungsfläche + etwa 2 Meter ist. Die Länge des Stahlseils beträgt 2 x Aufliegerlänge + 3 m und kann in Abhängigkeit von der Aufliegerlänge etwa 28 m betragen.

Die Arbeitsweise des Lösch- und Ladesystems ist im Prinzip einfach derart, daß zum Löschen das Tuch mit der darauf befindlichen Ladung mittels der Löscheinrichtung über den Aufliegerboden zur Heckseite gezogen wird, während zum Laden das Tuch in dem Maße des hintereinander erfolgenden Aufbringens der Ladung mit Hilfe der Kopfschottwindeneinrichtung in umgekehrter Richtung zur Vorderseite des Aufliegers gezogen wird. Es ist besonders nützlich, vor dem Laden darauf zu achten, daß mindestens eine Aufliegerlänge Tuch um die Löschtrommel gewickelt ist. Nachdem man mit einem Hubstapler z. B. Paletten in dem Maße auf das Tuch gesetzt hat, daß die volle Breite und Höhe des Laderaums ausgenutzt ist, wird das Tuch um eine Palettenlänge nach vorne gezogen. Diesen Zyklus wiederholt man, bis der gesamte Auflieger beladen ist. Das Laden kann natürlich an verschiedenen Ladestationen stattfinden.

Die Lösch- und Ladeeinrichtung ist üblicherweise mit einem Begrenzungssystem versehen, wobei zwischen einer der Seiltrommeln 8 und dem Kopfschott 5 zwei Endschalter montiert sind. Diese Endschalter sorgen für die Begrenzung des Systems in der vordersten und hintersten Position. Dabei wird das Schalten der Endschalter durch das Stahlseil ausgeführt. Durch die angebrachte Begrenzung soll das System automatisch anhalten, wenn die erste Reihe der geladenen Paletten in die vorderste Position gekommen ist. Die Ladegeschwindigkeit ist stufenlos regelbar bis 4 m/min oder sogar mehr.

Das Löschen kann schrittweise so erfolgen, daß man erst die hinterste Palettenreihe mit einem Hubstapler herausnimmt und dann das Tuch eine Palettenlänge nach hinten zieht, usw.. Man kann aber auch ununterbrochen löschen, wenn man hinter den Auflieger eine Rollenbahn oder ein Transportband anordnet. Die Löschzeit und die Ladezeit ist zwischen 3 und 10 Minuten variabel und evtl. schneller oder langsamer.

Eines der Antriebssysteme der Ladetrommel bzw. der Entladetrommel ist mit einem Impulsfühler versehen, um das Tuch in einer vordersten bzw. einer hintersten Stellung anzuhalten.

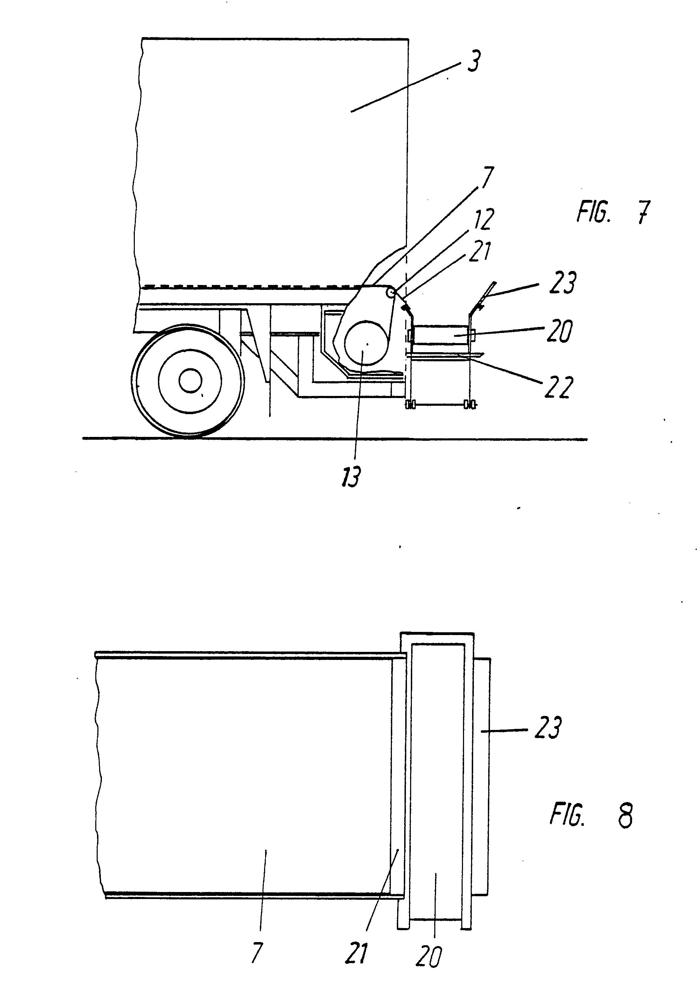

Nach den Figuren 7 und 8 befinden sich am Heck des Aufliegers 3 mehrere demontierbare Träger 22, auf die ein mit Fahrgestell ausgerüstetes Transportband 20 aufgesetzt werden kann. Der Spalt zwischen dem Tuch 7 und der Längswand des Transportbandes ist durch eine flexible Manschette 21 überbrückt. Auf die gegenüberliegende Seitenwand ist ein Prallblech 22 aufgesteckt, das bei hoher Löschgeschwindigkeit das Überfließen des Schüttgutes vermeidet. Das Transportband kann unter dem Auflieger mitgeführt und immer dann eingesetzt werden, wenn das Schüttgut beim Löschen nur in geringer Breite abgeworfen werden soll.

Die Tuchlänge beträgt bei einer nahezu ganz aus Tuch bestehenden Ladefläche 2 × Aufliegerlänge + 6 m und kann in Abhängigkeit von der Aufliegerlänge etwa 30 m sein.

Die Nutzladelänge beider Ausführungsformen des Ladebodens ist nahezu gleich. Mit Rücksicht auf den Kopfradius kann die Aufliegerlänge bei dem Stahlseilsystem zwar ein wenig länger gemacht werden als bei der Tuchausführung, jedoch geht durch das mitbewegbare Kopfschott wiederum etwas Nutzladelänge verloren.

Die in der Zeichnung dargestellten Antriebsmittel sind hydraulisch, wobei das hydraulische System zum Anhalten des Ladebodens in der vordersten und hintersten Stellung mit elektrisch betätigten Ventilen ausgestattet ist, so daß das System mit den oben genannten Endschaltern ausgeschaltet werden kann. Die Hydraulikpumpe ist an der Kraftabnahmestelle der Zugmaschine angebracht. Für spezielle Fälle jedoch, in denen es unzulässig ist, mit laufendem Zugmaschinenmotor zu laden und zu löschen (Tabak, Lebensmittel), wird der Auflieger mit einer 24 Volt-Antriebsbatterie mit einem angeschlossenen Elektromotor ausgestattet, der die Hydraulikpumpe antreibt.

Das einen Teil des Ladebodens ausmachende Tuch kann von unterschiedlicher Qualität sein. Wichtige Eigenschaften, die die Tuchwahl mit bestimmen, sind außer Flexibilität der Reibungskoeffizient und die Bruchstärke. So kann man als Tuch beispielsweise ein Kunststofftuch mit einem Reibungskoeffizienten von ungefähr 0,5, einer Dicke von ungefähr 3 mm und einer Bruchstärke von beispielsweise 33 t wählen. Das Tuch kann auch ein Material von Transportbandqualität sein. Es kann ferner aus einer biegsamen dünnen Metallbahn bestehen.

Natürlich können an dem Fahrzeug mit der darin angebrachten Lösch- und Ladeeinrichtung, wie im Vorgehenden besprochen und in der Zeichnung dargestellt ist, Änderungen angebracht werden, ohne daß man dadurch den Rahmen der Erfindung verläßt. Gemäß der Erfindung wird die Kopfschottwindeneinrichtung ebenso wie die Löschtrommel als ein umgekehrter Trommelmotor ausgeführt.

**Patentansprüche**

1. Fahrzeug für den Lasttransport, insbesondere eine Kombination aus Zugmaschine und Auflieger, mit einer Entlade- und Ladeeinrichtung, die einen Ladeboden mit einem auf dem Fahrzeugboden aufliegenden Tuch (7) als ladungstragendes Teil, eine in beiden Drehrichtungen drehbare Ladetrommel (8) und eine in beiden Drehrichtungen drehbare Entladetrommel (13), die an dem Fahrzeug gelagert sind, umfaßt, wobei der Ladeboden an dem einen Ende mit der Ladetrommel (8) und an dem anderen Ende mit der Entladetrommel (13) auf- und abwickelbar verbunden ist, dadurch gekennzeichnet, daß die Entladetrommel (13) und die Ladetrommel (8) jeweils über zwei im Inneren der Entladetrommel (13) bzw. der Ladetrommel (8) angeordnete, in einem zylindrischen Gehäuse untergebrachte und mit diesen fest verbundene Hydromotoren, die mit jeweils den nach außen weisenden Gehäusestirnflächen an dem Fahrzeugchassis befestigt sind, antreibbar sind, und daß die rotierbaren Antriebswellen der Hydromotoren jeweils gegen die Mitte der Trommeln vorstehen und jeweils über Kupplungsmittel mit der Innenseite der Entladungstrommel bzw. der Ladetrommel in Eingriff stehen.

2. Fahrzeug nach Anspruch 1, dadurch gekennzeichnet, daß der Ladeboden ein mit dem einen Ende des ladungstragenden Tuchs (7) über ein im wesentlichen vertikales, mit dem Tuch mitbewegtes Gestell (5) verbundenes Drahtseil aufweist, daß das andere Tuchende mit der Entladetrommel (13) verbunden ist und daß das Drahtseil mit der Ladetrommel (8) verbunden ist.

3. Fahrzeug nach Anspruch 2, dadurch gekennzeichnet, daß das Drahtseil über zwei in dem Gestell (5) angeordnete Seilscheiben (14, 15) geführt ist.

4. Fahrzeug nach einem der Ansprüche 1 bis 3, dadurch gekennzeichnet, daß an seinem Heck unterhalb des Ladebodens ein im wesentlichen quer zu diesem laufendes Transportband (20) ansetzbar ist, dessen Länge mindestens 100 % und dessen Breite 5 bis 30 % der Breite des Ladebodens beträgt und das durch das gleiche Antriebsmittel wie die Entladetrommel (13) antreibbar ist.

## Claims

1. A load-carrying vehicle, more particularly a combination of a tractor with a semitrailer, having loading and unloading means comprising : a loading platform having as load-carrying element a belt (7) disposed on the vehicle bed, a vehicle-mounted loading roller (8) rotatable to either hand, and a vehicle-mounted unloading roller (13) rotatable to either hand, the loading platform being so connected at one end to the loading roller (8) and at the other end to the unloading roller (13) as to be adapted to wind on and off such rollers, characterised in that the unloading roller (13) and the loading roller (8) are drivable by way of two hydromotors disposed in a cylindrical casing in the unloading roller (13) and loading roller (8) and rigidly secured to the casing and secured to the vehicle chassis by way of the outwards facing end faces of the casing ; and the rotatable drive shafts of the hydro motors project towards the centre of the rollers and each engage by way of coupling means with the inside of the respective roller.

2. A vehicle according to claim 1, characterised in that the loading platform has a wire rope connected to one end of the belt (7) by way of a substantially vertical frame (5) moving therewith, the other end of the belt (7) is connected to the unloading roller (13) and the wire rope is connected to the loading roller (8).

3. A vehicle according to claim 2, characterised in that the wire rop extends by way of two pulleys (14, 15) disposed in the frame (5).

4. A vehicle according to any of claims 1-3, characterised in that a conveyor belt (20) is attachable to the rear of the vehicle below the loading platform so as to move substantially transversely thereof, the length of the latter belt (20) being at least 100 %, and its width from 5 to 30 %, of the width of the loading platform, the belt being drivable by the same means as drive the unloading roller (13).

## Revendications

1. Véhicule pour le transport de charges, en particulier combinaison de tracteur et de semi-remorque, comportant un dispositif de déchargement et de chargement qui comprend un plancher de chargement avec une toile (7), reposant sur le plancher du véhicule, comme partie support de la charge, un tambour de chargement (8), qui peut tourner dans les deux sens, et un tambour de déchargement (13), qui peut tourner dans les deux sens, montés sur le véhicule, étant précisé que le plancher de chargement est relié, avec possibilité d'être enroulé et déroulé, à l'une de ses extrémités, au tambour de chargement (8) et, à l'autre extrémité, au tambour de déchargement (13), caractérisé en ce que le tambour de déchargement (13) et le tambour de chargement (8) peuvent être respectivement entraînés par l'intermédiaire de deux moteurs hydrauliques qui sont disposés à l'intérieur du tambour de déchargement (13) et du tambour de chargement (8), qui sont logés dans un carter cylindrique, qui sont solidarisés avec ces carters et qui sont respectivement fixés, sur le châssis du véhicule, aux surfaces frontales de la carrosserie regardant vers l'extérieur ; et en ce que les arbres d'entraînement, qui peuvent être entraînés en rotation, des moteurs hydrauliques font respectivement saillie en face de l'axe des tambours et sont respectivement en prise, par l'intermédiaire de moyens d'accouplement, avec la face intérieure du tambour de déchargement ou du tambour de chargement.

2. Véhicule selon la revendication 1, caractérisé en ce que le plancher de chargement présente un câble métallique lié à l'une des extrémités de la toile (7) support de la charge, par l'intermédiaire d'une cloison (5) pratiquement verticale et entraînée avec la toile ; en ce que l'autre extrémité de la toile est reliée au tambour de déchargement (13) ; et en ce que le câble métallique est relié au tambour de chargement (8).

3. Véhicule selon la revendication 2, caractérisé en ce que le câble métallique passe sur deux poulies à câble (14, 15) disposées dans le cadre (5).

4. Véhicule selon l'une des revendications 1 à 3, caractérisé en ce qu'à son arrière, en dessous du plancher de chargement, on peut installer un tapis transporteur (20) qui est dirigé pratiquement perpendiculairement à ce plancher de chargement et dont la longueur atteint au moins 100 % de la largeur du plancher de chargement et dont la largeur atteint 5 à 30 % de la largeur de ce plancher et qui peut être entraîné par le même moyen d'entraînement que le tambour de déchargement (13).

FIG.1

FIG.2

FIG.3

8

8

FIG.4

9

8

FIG.5

14

6

15

FIG.6

5

7

FIG. 7

FIG. 8